(19) Europäisches Patentamt
European Patent Office
Office européen des brevets

(11) **EP 2 773 144 A1**

(12) **EUROPEAN PATENT APPLICATION**

(43) Date of publication:
**03.09.2014 Bulletin 2014/36**

(51) Int Cl.:
**H04W 24/06** (2009.01)   **H04L 12/26** (2006.01)
**H04W 84/04** (2009.01)

(21) Application number: **13305234.0**

(22) Date of filing: **01.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Thomson Licensing
92130 Issy-les-Moulineaux (FR)**
• **Université Pierre et Marie Curie
75252 Paris Cedex 05 (FR)**

(72) Inventors:
• **Di Cioccio, Lucas
92443 Issy-les-Moulineaux cedex (FR)**
• **May, Martin
92443 Issy-les-Moulineaux cedex (FR)**
• **Teixeira, Renata
75013 Paris (FR)**
• **Kurose, Jim
Amherst, MA Massachusetts 01003 (US)**

(74) Representative: **Huchet, Anne et al
Technicolor
1, rue Jeanne d'Arc
92443 Issy-les-Moulineaux Cedex (FR)**

(54) **Method of diagnosis of degradation in a heterogeneous network using a neighbour network**

(57)     Method of diagnosis of a heterogeneous network (2) degradation, said heterogeneous network (2) connecting a user terminal (18) and a server through a plurality of links (30, 32, 34, 36, 38, 40) each of them having a given direction, and comprising at least one home network (4), one access network (10, 12) and one neighboring network (6), wherein said method comprises a step of using the neighboring network (6) to determine at least one link of the heterogeneous network (2) in which the degradation occurs and the direction of said link.

FIG.2

**Description**

FIELD OF THE INVENTION

The present invention generally relates to heterogeneous networks comprising, for instance, a home network and an access network.

More particularly, the invention deals with the diagnosis of such networks performance.

Thus, the invention concerns a method and a device of diagnosis of a network degradation. It also concerns a computer program implementing the method of the invention.

BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Hundreds of millions of homes today connect to the Internet using a broadband access. Within these homes, numerous devices interconnect via a home network using technologies such as Ethernet, Powerline, MoCa (Multimedia over Coax alliance), or WiFi. These home networks, in turn, connect to the larger Internet via access networks including DSL (Digital Subscriber Line), cable, and wireless.

This network heterogeneity and complexity causes difficulties for diagnosing network performance degradation and variability, and pinpointing the source of a problem at the network's edge.

While many tools exist for diagnosing a network backbone, much fewer tools exist for diagnosing performance problems within the home network or within the access network.

An example of network degradation is latency. The latency, also called delay, expresses how much time it takes for a data packet to get from one point to another of the network. Conventionally, latency is measured by sending a packet that is returned to the sender and the round-trip time is considered as the latency.

If the latency is too high, the user experiences congestion and he has to wait in order to access a requested content, for example when browsing the Internet. In this case, said user is interested in where the delay occurs. For example, is the delay in the home network or in the access network, and does this delay occur in the upstream or downstream direction? The user's ISP (Internet Service Provider) is also interested in this information, particularly when the user calls the ISP to report a poor performance and requests a diagnosis.

Typically, the only existing recourse is to employ generic tools such as *ping, traceroute,* and *pathchar.* These tools are not sufficient as they don't enable an accurate diagnosis of the degradation location, particular of the direction, i.e. downstream or upstream, of the link in which the degradation occurs. Besides, the existing tools often require a remote cooperation host.

This lack of tools and techniques is particularly acute when it comes to diagnosing and pinpointing latency variations at the network's edge.

SUMMARY OF THE INVENTION

The present invention proposes a solution for improving the situation.

Accordingly, the present invention provides a method of diagnosis of a heterogeneous network degradation, said heterogeneous network connecting a user terminal and a server through a plurality of links, each of them having a given direction, and comprising at least one home network, one access network and one neighboring network, wherein said method comprises a step of using the neighboring network to determine at least one link of the heterogeneous network in which the degradation occurs and the direction of said link.

By direction of the link, it is meant here the direction of transmission on the link. For example, if the link supports a transmission from the user terminal to the server, it is an upstream link whereas, if it supports a transmission from the server to the user terminal, it is a downstream link.

An heterogeneous network here means a network involving different types of devices, such as laptops, smartphones, printers, etc., and/or different technologies, such as Ethernet, WiFi, etc. Typically, the heterogeneous network comprises a plurality of home networks, each home network interconnecting devices within a user home and an access network connecting the home networks to the larger Internet.

The server is, for instance, an Internet server providing access to an Internet service.

Furthermore, it is assumed here, that the user may access the Internet, using a neighboring network, such as the home network of a neighbor, called here neighbor network, and/or a community network, like a WiFi community, where customers of an ISP receive credentials to connect to WiFi access points of other customers of that ISP.

This assumption of availability of at least one neighboring network is generally achieved nowadays in most of the world's countries. For example, it has been shown that 60% of the French homes have access to at least one community network.

By using the neighboring network, the method of the present invention provides an efficient diagnosis tool permitting to determine accurately the source of degradation in the heterogeneous network. For example, if the neighboring network has a different ISP than the home network, it is possible, using the method of the invention, to detect if the degradation is limited to a single ISP or not.

Advantageously, the home network is a wired network and the neighboring network is a wireless network.

For example, the home network is a Local Area Network (LAN) and the neighboring network is a WiFi network.

According to a first embodiment, the neighboring network is used to determine a latency of each link of the home network and of the access network.

This determination enables to infer accurately the direction of the link, for instance upstream or downstream, in which a high latency occurs and causes a network congestion.

Advantageously, the method of diagnosis comprises the steps of :

a) sending a plurality of probe packets along paths of the heterogeneous network, in which at least one path involves at least one link of the neighboring network;
b) measuring delays on these paths; and
c) combining the measured delays to deduce the latency of each link of the home network and the access network.

Advantageously, the measured delays at step b) are round trip delays.

According to a second embodiment, the neighboring network is used to determine a packet loss on at least one link of the home network and the access network.

Advantageously, the method of diagnosis comprises the steps of :

d) sending a plurality of probe packets along paths of the heterogeneous network, in which at least one path involves at least one link of the neighboring network;
e) measuring loss rates on these paths; and
f) combining the measured loss rates to deduce the loss rate of each link of the home network and the access network.

According to an embodiment, the probe packets are sent from the user terminal.

Advantageously, the probe packets comprise "ping" probes.

Depending on the network capabilities, the ping probes may contain either UDP ("User Datagram Protocol") or ICMP (Internet Control Message Protocol) packets.

According to an embodiment, the probe packets comprise cyclic probes.

For example, cyclic and round-trip nodes may be used, the cyclic probes containing UDP packets and the round-trip probes containing ICMP packets.

The invention further provides a device of diagnosis of a heterogeneous network degradation, said heterogeneous network connecting a user terminal and a server through a plurality of links, each of them having a given direction, and comprising at least one home network, one access network and one neighboring network, wherein said device comprises a diagnosis module able to use the neighboring network to determine at least one link of the heterogeneous network in which the degradation occurs.

Advantageously, the device of diagnosis is the user terminal or a home gateway.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

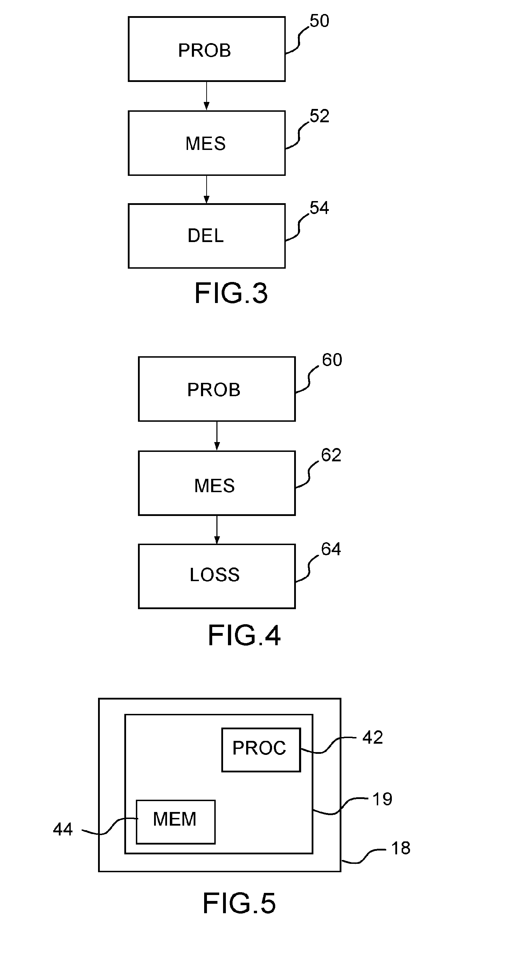

The invention thus provides a computer-readable program comprising computer-executable instructions to enable a computer to perform the method of the invention. The diagrams of figures 3 and 4 illustrate examples of the general algorithm for such computer program.

BRIEF DESCRIPTION OF THE DRAWINGS

The present invention is illustrated by way of examples, and not by way of limitation, in the figures of the accompanying drawings, in which like reference numerals refer to similar elements and in which:

- Figure 1 is a schematic view of a heterogeneous network wherein the diagnosis method of the present invention is advantageously implemented ;

- Figure 2 is a schematic view of the heterogeneous network of Figure 1 showing the links within said heterogeneous network;

- Figure 3 is a flowchart showing the steps of a diagnosis method according to a first embodiment of the present invention;

- Figure 4 is a flowchart showing the steps of a diagnosis method according to a second embodiment of the present invention; and

- Figure 5 is a schematic view of a device of diagnosis according to an embodiment of the invention.

DETAILED DESCRIPTION OF PREFERRED EMBODIMENTS

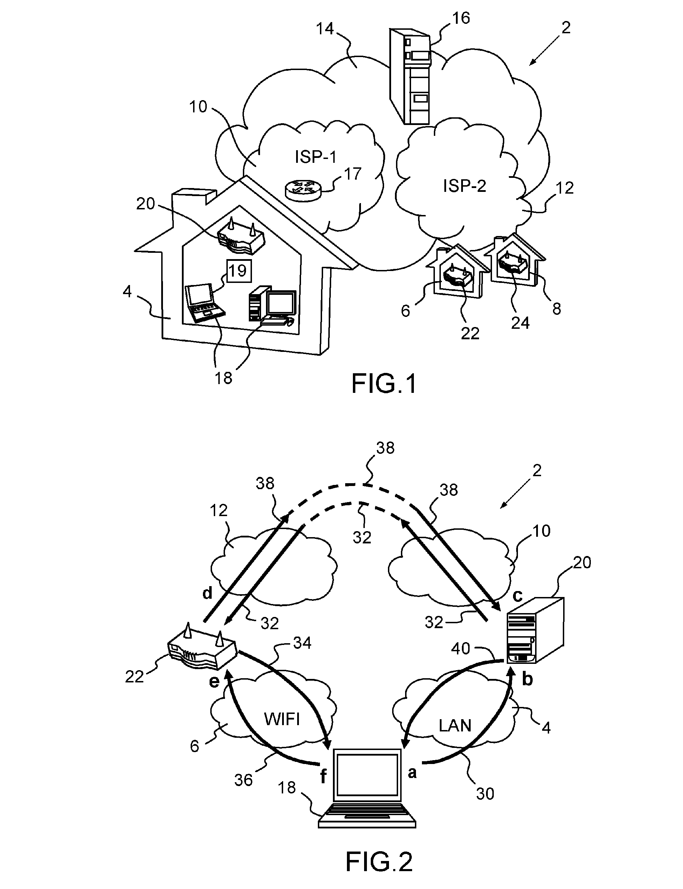

Referring to Figure 1, there is shown therein a schematic view of a heterogeneous network 2.

The heterogeneous network 2 comprises a home network 4 and neighboring networks 6, 8.

The heterogeneous network 2 also comprises access networks 10, 12, connecting respectively the home network 4 and the neighboring networks 6, 8 to the Internet network 14, particularly to an Internet server 16 providing a service to a user.

The first access network 10 is, for instance, the network of a first ISP, called ISP-1, that provides Internet services to the home network 4. An ISP router 17 connects the first access network 10 to the Internet 14.

The second access network 12 is, for instance, the network of a second ISP, called ISP-2, that provides Internet services to the neighboring networks 6, 8.

The home network 4 comprises user terminals 18, such as, for example, a laptop, a desktop, a connected TV, a telephone, a tablet. These terminals 18 are connected to the access network 10 and to the larger Internet network 14 through a home gateway 20.

At least one user terminal 18, for example the laptop, comprises a diagnosis module 19 implementing the method of diagnosis of the present invention.

According to an embodiment, the home gateway 20 combines a modem, a WiFi access point, and a router.

According to another embodiment, the home gateway 20 is an IP router whereas the modem is a distinct physical device.

In the present description, it is assumed that the home network 4 connecting the user terminals 18 to the home gateway 20 is a Local Area Network (LAN).

Besides, it is assumed that the neighboring network 6 is a wireless network, for instance a WiFi network and that the home gateway 20 is within the range of this neighboring network 6 and is able to connect to said neighboring network 6.

The neighboring networks 6, 8 also comprise respectively home gateways 22, 24 in order to connect to the access network 12.

A user in the home network 4 connects to the remote service provided by the server 16, for example, browsing video websites, and experiences the end-to-end performance. This online experience includes the performance limitations of the home network 4. In general, a single performance bottleneck limits the end-to-end performance. For example, the video cannot load faster than the slowest link on the end-to-end path from the user terminal 18 to the server 16.

The method of diagnosis according to the present invention enables an accurate pinpointing of the degradation of performance of the heterogeneous network 2. More particularly, the method of the invention permits to identify accurately the link of the heterogeneous network where such impairment is localized.

Figure 2 shows an example of the links of the heterogeneous network 2 that connect a user terminal 18 to the Internet 14, and therefore to the server 16.

An interface a on the user terminal 18 is used to connect said terminal 18 via the home network 4 to an interface b on the home gateway 20 router which then connects via an interface c thereon to the first access network 10 and from there to the larger Internet 14.

Besides, the user terminal 18 is able to connect to the neighboring network 6 via an interface f to an interface e of the home gateway 22 of the neighboring network 6. An interface d of the home gateway 22 of the neighboring network enables then a connection to the second access network 12 and from there to the larger Internet 14.

In figure 2 :

- the upstream link connecting the interfaces a and b is referenced 30;
- the link connecting the interfaces c and d, in the direction c to d, is referenced 32;

- the downstream link connecting the interfaces e and f is referenced 34;
- the upstream link connecting the interfaces f and e is referenced 36;
- the link connecting the interfaces c and d, in the direction d to c, is referenced 38; and
- the downstream link connecting the interfaces a and b is referenced 40.

According to a first embodiment, the user experiences a congestion when he tries to access the service provided by the server 16.

The flowchart of Figure 3 details the steps of the method of diagnosis of the invention, according to a preferred embodiment, to infer the exact link and direction in which a high latency occurs.

These steps are advantageously implemented by the diagnosis module 19, which comprises a processor 42 and a memory 44, as represented in Figure 5.

This method of diagnosis exploits the cyclic topology of the heterogeneous network 2 with three segments, i.e. six directional links, ab, cd, ef, fe, dc, ba, as shown in Figure 2.

At step 50, a plurality of probe packets is sent along different paths of the heterogeneous network 2, in which at least one path involves at least one link of the neighboring network 6, i.e. the link 34 and/or the link 36.

Then, at step 52, delays can be measured on these paths.

The cyclic topology of the heterogeneous network 2 enables a number of useful measurements at step 52, as for example :

- RTT estimates to local gateway interfaces b, e via an ICMP ping probe: the user terminal 18 individually pings, at step 50, interfaces b and e, respectively of its home gateway 20 and of the neighboring home gateway 22, thus obtaining, at step 52, RTT measurements $\hat{d}_{aba}$ et $\hat{d}_{fef}$;
- RTT estimates to the public interface c of the local home gateway 20 via an ICMP ping probe: the user terminal 18 pings, at step 50, via the neighboring home gateway interface d along the path fedc, yielding, at step 52, the RTT measurement $\hat{d}_{fedcdef}$. In order to be able to perform this measurement, the terminal 18 discovers, in a preliminary step (not represented), the IP address of the interface c;
- Clockwise and counter-clockwise full cycle probes : the user terminal 18 sends, at step 50, a probe message that traverses a cycle, either clockwise or counter-clockwise, beginning and ending at the terminal 18 itself. For example, by sending a probe on its outgoing interface a addressed to its own interface f, the terminal 18 can directly measure, at step 52, the counter-clockwise cyclic one way delay $\hat{d}_{abcdef}$. The clockwise cyclic delay $\hat{d}_{fedcba}$ can similarly be measured.

Generally, the measurements performed at step 52 can vary even in short periods of time. Thus, according to an embodiment, minimum delays are estimated by sending a train of probes, at step 50, and taking, at step 52, the minimum value.

At step 54, the measured delays at step 52 are combined to deduce the delays $d_{ab}$, $d_{ba}$, $d_{cd}$, $d_{dc}$, $d_{ef}$ and $d_{fe}$ of the links 30, 40, 32, 38, 34 and 36, respectively.

It is important to note that in each of the above measurements, the measured multihop delays are composed of various combinations of the unknown per-hop delays $d_{ab}$, $d_{ba}$, $d_{cd}$, $d_{dc}$, $d_{ef}$ and $d_{fe}$. Given the topology in Figure 2, these relationships can be represented by the following system of linear equations:

$$\begin{pmatrix} 1 & 1 & 0 & 0 & 0 & 0 \\ 1 & 1 & 1 & 1 & 0 & 0 \\ 0 & 0 & 1 & 1 & 1 & 1 \\ 0 & 0 & 0 & 0 & 1 & 1 \\ 1 & 0 & 1 & 0 & 1 & 0 \\ 0 & 1 & 0 & 1 & 0 & 1 \end{pmatrix} \cdot \begin{pmatrix} d_{ab} \\ d_{ba} \\ d_{cd} \\ d_{dc} \\ d_{ef} \\ d_{fe} \end{pmatrix} = \begin{pmatrix} \hat{d}_{aba} \\ \hat{d}_{abcdcba} \\ \hat{d}_{fedcdef} \\ \hat{d}_{fef} \\ \hat{d}_{abcdef} \\ \hat{d}_{fedcba} \end{pmatrix}$$

This system of six equations has six unknowns. Unfortunately, the rank of the above matrix is four. In order to solve this system, it is then necessary either to reduce the number of unknowns or to increase the number of equations. One way to do this is to assume symmetric delays in the local networks (i.e., $d_{ab} = d_{ba}$ and $d_{fe} = d_{ef}$). Prior work shows that this assumption is reasonable unless many WiFi nodes use VoIP (Voice over IP) at the same time; moreover, local network delays are typically smaller than access network delays, given link transmissions speeds.

Assuming symmetric local network delays reduces the number of unknowns to four, yielding six measurement equations with four unknowns.

Having more equations than unknowns provides the possibility of choosing which set of measurement equations to use.

One reduction uses both one-way measurements (i.e., $\hat{d}_{abcdef}$ and $\hat{d}_{fedcba}$):

$$\begin{pmatrix} 2 & 0 & 0 & 0 \\ 0 & 0 & 0 & 2 \\ 1 & 1 & 0 & 1 \\ 1 & 0 & 1 & 1 \end{pmatrix} \cdot \begin{pmatrix} d_{ab} \\ d_{cd} \\ d_{dc} \\ d_{fe} \end{pmatrix} = \begin{pmatrix} \hat{d}_{aba} \\ \hat{d}_{fef} \\ \hat{d}_{abcdef} \\ \hat{d}_{fedcba} \end{pmatrix}$$

A second reduction uses an RTT measurement to a public gateway interface instead of a one-way cyclic delay measurement. Specifically, replacing the last equation above yields:

$$\begin{pmatrix} 2 & 0 & 0 & 0 \\ 0 & 0 & 0 & 2 \\ 1 & 1 & 0 & 1 \\ 0 & 1 & 1 & 2 \end{pmatrix} \cdot \begin{pmatrix} d_{ab} \\ d_{cd} \\ d_{dc} \\ d_{fe} \end{pmatrix} = \begin{pmatrix} \hat{d}_{aba} \\ \hat{d}_{fef} \\ \hat{d}_{abcdef} \\ \hat{d}_{fedcdef} \end{pmatrix}$$

When measurement probes allow for multiple reductions, the result accuracy may be improved by averaging the inferred delay values of all reductions.

According to an embodiment, Network Address Translators (NATs), which significantly complicate the measurements, are also addressed.

Indeed, the user terminal 18 generally receives a private IP address (for example, in the 192.168/16 sub-network) and connects to the Internet through a NAT. Thus, the terminal 18 must first discover the public IP addresses of the home gateways 20, 22 before probing them. Advantageously, the public IP addresses of the home gateways 20, 22 are gathered with the support of a remote web server that returns the requesting-IP-address of a web client or with the support of the home-gateway which advertises its public IP address, for example via UPnP (Universal Plug and Play). Hence, a web client behind a NAT can retrieve its public IP address, which can then be used in issuing the pings to the home gateways 20, 22.

NAT also introduces complications into the one-way cyclic delay measurements. Here, the problem is that a NATed terminal must be able to receive packets on one of its interfaces. In order for the incoming measurement packets to punch through the NAT, the NAT must support port-mapping for incoming packets. To accomplish this, according to an embodiment, a port-mapping is automatically configured between a port on the home gateway 20, 22 and a port on the terminal 18 using a UPnP.

According to a second embodiment, the user experiences a loss of data packets when he tries to access the service provided by the server 16.

The flowchart of Figure 4 details the steps of the method of diagnosis of the invention, according to a preferred embodiment, to infer the exact link and direction in which a loss occurs.

This method of diagnosis exploits the cyclic topology of the heterogeneous network 2 with three segments, i.e. six directional links, ab, cd, ef, fe, dc, ba, as shown in Figure 2.

At step 60, a plurality of probe packets is sent along different paths of the heterogeneous network, in which at least one path involves at least one link of the neighboring network 6, i.e. the link 34 and/or the link 36.

The same probe packets are used as in step 50 of the first embodiment.

Then, at step 62, packet loss rates can be measured on these paths.

Advantageously, step 62 can be carried simultaneously to step 52 of the first embodiment, so that loss rates are measured at the same time as delays.

At step 64, the measured loss rates at step 62 are combined to deduce the loss rates of the links 30, 32, 34, 36, 38, 40.

Advantageously, the same system of equations used at step 54 of the first embodiment is reused by using the property that link transmission rates, i.e., the complement of loss rates, multiply along a path of uncorrelated links while link delays cumulate.

By noting $T_{ab}$ the transmission rate on the link 30 between the interfaces a and b, and $\hat{T}_{aba}$ the overall transmission rate from a to b and back to a, we have $log(T_{aba}) = log(T_{ab}) + log(T_{ba})$ for strictly positive transmission rates. A transmission rate of zero means that there is no link between a and b. In practice, transmission rates of zero can be observed for a perfectly-working link if the policy of the network is to block some probes, as for example ICMP pings.

The topology of Figure 2 yields the following linear system of equations :

$$\begin{pmatrix} 1 & 1 & 0 & 0 & 0 & 0 \\ 1 & 1 & 1 & 1 & 0 & 0 \\ 0 & 0 & 1 & 1 & 1 & 1 \\ 0 & 0 & 0 & 0 & 1 & 1 \\ 1 & 0 & 1 & 0 & 1 & 0 \\ 0 & 1 & 0 & 1 & 0 & 1 \end{pmatrix} \cdot \begin{pmatrix} log(T_{ab}) \\ log(T_{ba}) \\ log(T_{cd}) \\ log(T_{dc}) \\ log(T_{ef}) \\ log(T_{fe}) \end{pmatrix} = \begin{pmatrix} log(\hat{T}_{aba}) \\ log(\hat{T}_{abcdcba}) \\ log(\hat{T}_{fedcdef}) \\ log(\hat{T}_{fef}) \\ log(\hat{T}_{abcdef}) \\ log(\hat{T}_{fedcba}) \end{pmatrix}$$

Advantageously, it is assumed that loss rates are symmetric (or that the asymmetry is negligible) in the home network 4 and on the neighboring network 6.

Under these assumptions, it is possible to reduce the above system of equations like in the first embodiment.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For instance, while the diagnosis module is implemented in the user terminal in the described embodiment, it may be advantageously implemented in the home gateway 20.

Besides, while in the present invention, ISP1 and ISP2 are different ISPs, the invention is applicable to the case where ISP1 and ISP2 are indeed a same ISP.

Besides, while in the present description, the home network is a LAN network and the neighboring network is a WiFi network, the invention can be applied to any configuration in which the user terminal has two means to access the Internet, for example WiFi and 3G, WiFi and 4G, ADSL and cable, etc.

**Claims**

1. Method of diagnosis of a heterogeneous network (2) degradation, said heterogeneous network (2) connecting a user terminal (18) and a server (16) through a plurality of links (30, 32, 34, 36, 38, 40) each of them having a given direction, and comprising at least one home network (4), one access network (10, 12) and one neighboring network (6), wherein said method comprises a step of using the neighboring network (6) to determine at least one link of the heterogeneous network (2) in which the degradation occurs and the direction of said link.

2. Method of claim 1, wherein the home network (4) is a wired network and the neighboring network (6) is a wireless network.

3. Method of claim 1 or 2, wherein the neighboring network (6) is used to determine a latency of each link of the home network (4) and of the access network (10, 12).

4. Method of claim 3, comprising the steps of;

   a) sending a plurality of probe packets along paths of the heterogeneous network (2), in which at least one path involves at least one link (34, 36) of the neighboring network (6);
   b) measuring delays on these paths; and
   c) combining the measured delays to deduce the latency of each link of the home network (4) and the access network (10, 12).

5. Method of claim 4, wherein the measured delays at step b) are round trip delays.

6. Method of any of claims 1 to 5, wherein the neighboring network (6) is used to determine a packet loss on at least one link of the home network (4) and the access network (10, 12).

7. Method of claim 6, comprising the steps of;

   d) sending a plurality of probe packets along paths of the heterogeneous network (2), in which at least one path involves at least one link (34, 36) of the neighboring network (6);
   e) measuring loss rates on these paths; and
   f) combining the measured loss rates to deduce the loss rate of each link of the home network (4) and the access network (10, 12).

8. Method of claim 4 or 7, wherein the probe packets are sent from the user terminal (18).

9. Method of one of claims 4, 7 or 8, wherein the probe packets comprise "ping" probes.

10. Method of one of claims 4, 7, 8 or 9, wherein the probe packets comprise cyclic probes.

11. Device (18) of diagnosis of a heterogeneous network (2) degradation, said heterogeneous network (2) connecting a user terminal (18) and a server (16) through a plurality of links (30, 32, 34, 36, 38, 40), each of them having a given direction, and comprising at least one home network (4), one access network (10, 12) and one neighboring network (6), wherein said device (8) comprises a diagnosis module (19) able to use the neighboring network (6) to determine at least one link of the heterogeneous network (2) in which the degradation occurs.

12. Device of claim 11, wherein the neighboring network (6) is used to determine a latency of each link of the home network (4) and of the access network (10, 12).

13. Device of claim 11 or 12, wherein the neighboring network (6) is used to determine a packet loss on at least one link of the home network (4) and the access network (10, 12).

14. A computer-readable program comprising computer-executable instructions to enable a computer to perform the method of any one of claims 1 to 10.

FIG.1

FIG.2

PROB — 50

↓

MES — 52

↓

DEL — 54

FIG.3

PROB — 60

↓

MES — 62

↓

LOSS — 64

FIG.4

PROC — 42

19

MEM — 44

18

FIG.5

Europäisches
Patentamt

European
Patent Office

Office européen
des brevets

**EUROPEAN SEARCH REPORT**

Application Number

EP 13 30 5234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 530 875 A1 (ALCATEL LUCENT [FR]) 5 December 2012 (2012-12-05) | 1,2,6-8, 10,11, 13,14 | INV. H04W24/06 H04L12/26 |
| Y | * paragraph [0007] - paragraph [0011] * * paragraph [0015] - paragraph [0016] * * paragraph [0021] * * paragraph [0038] * * paragraph [0045] * * paragraph [0050] - paragraph [0052] * * paragraph [0059] * ----- | 3-5,9,12 | ADD. H04W84/04 |
| X | WO 2011/047721 A1 (NOKIA SIEMENS NETWORKS OY [FI]; MORPER HANS-JOCHEN [DE]; MARKWART CHRI) 28 April 2011 (2011-04-28) | 1,11,14 | |
| Y | * page 9, line 20 - page 10, line 29 * * page 12, lines 13-24 * * page 12, line 26 - page 13, line 4 * * page 13, line 12 - page 16, line 32 * * page 14, line 19 - page 15, line 16 * * page 15, lines 13-32 * * page 21, line 6 - page 22, line 6 * * page 28, lines 1-10 * * page 28, lines 26-30 * ----- | 3-5,9,12 | |
| A | US 2010/110921 A1 (FAMOLARI DAVID [US] ET AL) 6 May 2010 (2010-05-06) * paragraph [0023] * * paragraph [0035] * * claim 1 * ----- | 1-14 | TECHNICAL FIELDS SEARCHED (IPC) H04W H04L |
| A | WO 2010/037128 A1 (TOSHIBA KK [JP]; TELCORDIA TECH INC [US]; MANOUSAKIS KYRIAKOS [US]; FA) 1 April 2010 (2010-04-01) * abstract * ----- | 1-14 | |

The present search report has been drawn up for all claims

| Place of search | Date of completion of the search | Examiner |
|---|---|---|
| Munich | 29 May 2013 | Kahl, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 5234

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2013

| Patent document cited in search report | | Publication date | Patent family member(s) | | Publication date |
|---|---|---|---|---|---|
| EP 2530875 | A1 | 05-12-2012 | EP | 2530875 A1 | 05-12-2012 |
| | | | EP | 2530876 A1 | 05-12-2012 |
| WO 2011047721 | A1 | 28-04-2011 | CN | 102577242 A | 11-07-2012 |
| | | | EP | 2491676 A1 | 29-08-2012 |
| | | | US | 2012269082 A1 | 25-10-2012 |
| | | | WO | 2011047721 A1 | 28-04-2011 |
| US 2010110921 | A1 | 06-05-2010 | CN | 102204349 A | 28-09-2011 |
| | | | JP | 2012504380 A | 16-02-2012 |
| | | | US | 2010110921 A1 | 06-05-2010 |
| | | | WO | 2010037128 A1 | 01-04-2010 |
| WO 2010037128 | A1 | 01-04-2010 | CN | 102204349 A | 28-09-2011 |
| | | | JP | 2012504380 A | 16-02-2012 |
| | | | US | 2010110921 A1 | 06-05-2010 |
| | | | WO | 2010037128 A1 | 01-04-2010 |

EPO FORM P0459

For more details about this annex : see Official Journal of the European Patent Office, No. 12/82